# EUROPÄISCHE PATENTSCHRIFT

(11) **EP 0 726 418 B1**
(45) Veröffentlichungstag und Bekanntmachung des Hinweises auf die Patenterteilung: **26.09.2001**
(21) Anmeldenummer: 96101314.1
(22) Anmeldetag: 31.01.1996
(51) Int. Cl.: F16L 33/22

(54) **Schlauchanschluss, insbesondere zum Anschluss von Schläuchen, wie Gartenschläuchen**
Hose connection, particularly for connecting hoses such as garden hoses
Connexion de tuyaux souples, en particulier pour connecter des tuyaux flexibles tels que des tuyaux d'arrosage

(30) Priorität: 04.02.1995 DE 19503722
(43) Veröffentlichungstag der Anmeldung: 14.08.1996
(60) Teilanmeldung: 00111750.6
(73) Patentinhaber: GARDENA Kress + Kastner GmbH, D-89079 Ulm (DE)
(72) Erfinder:
(74) Vertreter: Patentanwälte Ruff, Wilhelm, Beier, Dauster & Partner

(56) Entgegenhaltungen:
- DE-A- 3 133 837
- DE-C- 530 956
- DE-C- 696 917
- FR-A- 2 398 958
- US-A- 996 114

## Beschreibung

Die Erfindung betrifft einen Schlauchanschluß, insbesondere zum Anschluß von Schläuchen, wie Gartenschläuchen, an Schlauchkupplungen, mit einem Rohransatz, auf den der Schlauch geschoben wird, und Greifelementen, die den Schlauch von außen her unter Einwirkung einer Hülse auf den Rohransatz drücken, wobei die Hülse eine den Schlauch umgebende Verlängerung hat, die über den Rohransatz hinausragt.

Ein derartiger Schlauchanschluß, insbesondere für Luftfahrzeuge, ist aus der DE 696 917 bekannt geworden. Dort wird der Rohransatz, auf den der Schlauch geschoben wird, von einer geschlitzten Hülse umgeben. Zwischen einer vom Rohransatz getrennten Überwurfmutter und einer damit verschraubten Hülse wird eine Axialkraft erzeugt, die die geschlitzte Hülse auf den Schlauch und diesen auf den Rohransatz drückt.

Eine ähnliche Anordnung zeigt die FR 2 398 958, wobei die Hülse zweigeteilt ist.

Die DE 530 956 zeigt eine Anordnung, bei der die Überwurfmutter, die mit dem Grundkörper des Schlauchanschlusses verschraubt wird, in einer inneren Ringnut den Flansch eines düsenförmigen Klemmkörpers trägt, der aus Blech besteht und geschlitzt ist. Die Haltekraft soll dadurch erzeugt werden, daß diese geschlitzte Hülse unter Zwischenlage des Schlauches auf den konisch ausgebildeten Rohransatz gezogen wird.

Bei diesem Schlauchanschluß ragt der Rohransatz, auf den der Schlauch geschoben und nahe seinem Ende durch an den Grundkörper des Schlauchanschlusses angeformte elastische Greifelemente gehalten wird, bis über das Ende der Hülsenverlängerung hinaus. Dadurch wird im Bereich dieses Endes der Schlauch nochmals auf den dort konischen Rohransatz gedrückt, so daß sich eine Doppelklemmung ergibt. Diese wird jedoch nur dann wirksam, wenn der Schlauch stets die gleiche Wandstärke hat. Bei variierenden Wandstärken wird entweder die eine oder die andere Klemmung wirksam, weil die Schraubhülse gleichzeitig die Greifelemente und die Verlängerung mit ihrem nach innen gerichteten Wulst betätig. Dadurch ist stets die eine oder die andere Klemmung nicht ideal, was zu unklaren und unsicheren Anschlußverhältnissen führen kann.

Das DE-U-94 03 412 betrifft eine ähnliche Ausführung, bei der die Verlängerung der Hülse am Schlauchaußenumfang eng anliegen, und ggf. auch mit innerer Aufrauhung der Hülse, eine Zugentlastung und einen Knickschutz bilden soll.

### AUFGABE UND LÖSUNG

Aufgabe der Erfindung ist es, einen Schlauchanschluß zu schaffen, der eine sichere Befestigung von Schläuchen unterschiedlicher Art udn Wandstärke ermöglicht. Diese Aufgabe Diese Aufgabe wird durch den Anspruch 1 gelöst.

Dadurch, daß die Hülse über den Rohransatz hinausragt, wird der Schlauch in dem Bereich der Verlängerung nicht eingeklemmt, sondern nur an seinem Außenumfang geführt und ggf. an einer Aufweitung gehindert. Dies wirkt einer Aufweitungstendenz des Schlauches entgegen, die im Bereich des Schlauchanschlusses auftreten kann, da durch die Greifelemente, die sich in die Schlauchwandung eindrücken, der Schlauch an dieser Stelle geschwächt wird. Ferner kann unter hohen Innendrücken sich die Schlaucharmierung, beispielsweise kreuzweise gelegte Textilrovings, vom Ende her etwas herausziehen und so am Austritt des Schlauches eine blasenartige Aufweitung hervorrufen. Dies wird durch die Hülsenverlängerung verhindert. Gleichzeitig ist es aber möglich, in diese Verlängerung auch Schläuche unterschiedlichen Durchmessers einzuführen, insbesondere, wenn die Hülse dort mit einem geringen Abstand vom Schlauch ausgebildet ist. An der Hülsenmündung selbst kann die Verlängerung einen dem normalen Schlauchdurchmesser im wesentlichen angepaßten Innenwulst aufweisen. So ist es immer noch möglich, auch einen dickeren Schlauch mit einigem Druck in die Öffnung einzuführen, da er etwas zusammendrückbar ist. Über die übrige Länge der Hülsenverlängerung läuft er dann jedoch relativ reibungsfrei ein.

Die Hülsenverlängerung kann um mindestens den Schlauchdurchmesser über den Rohransatz hinausragen. Dieser Bereich verlängert den Schlauchanschluß noch nicht in störender Weise, sorgt aber gleichzeitig dafür, daß unerwünschte Aufweitungserscheinungen nicht auftreten.

Die Hülse kann mehrteilig, insbesondere zweiteilig, ausgebildet sein und vorzugsweise aus einem Schraubstück mit einem Gewinde und einem Hülsenstück bestehen. Dabei kann das Hülsenstück drehbar, jedoch in axialer Richtung kraftübertragend mit dem Schlauchstück verbunden und vorzugsweise an dem Hülsenstück eine ggf. konische Betätigungsfläche für die Greifelemente ausgebildet sein. Schraub- und Hülsenstück können relativ zueinander drehbar verbunden sein. Wenn also zum Anziehen des Schraubanschlusses das Schraubstück auf ein Gewinde am Grundkörper des Schlauchanschlusses geschraubt wird, dann bewegt sich die Betätigungsfläche zur Radialbewegung der Greifelemente axial, muß sich jedoch nicht mit der Schraubhülse drehen, so daß auf die Greifelemente keine Kraft in Umfangsrichtung ausgeübt wird. Dies ermöglicht ein festes Anziehen des Schlauchanschlusses ohne Rückfederungstendenz.

Im Bereich dieser Drehverbindung wird zwischen Schraubstück und Hülsenstück eine erhebliche Axialkraft übertragen. Dazu weisen in der Kraftübertragungsrichtung (Aufschraubrichtung des Schraubstückes) Hülsenstück und Schraubstück jeweils axiale Anschlagsflächen auf. In der Gegenrichtung kann eine Rastverbindung vorgesehen sein, die es ermöglicht, das Schraubstück auf das Hülsenstück zu stecken, gleichzeitig aber auch in der Gegenrichtung eine Sicherung gegen Herausfallen bildet.

Der Schlauchanschluß kann mit seinem Grundkörper gleichzeitig den Grundkörper einer Schlauchkupplung bilden. Er ist aber auch für andere Teile, beispielsweise für Schlauchverbinder mit zwei durch einen gemeinsamen Grundkörper verbundenen Schlauchanschlüssen etc. geeignet. Die zweigeteilte Ausführung ermöglicht es auch, Schraubstück und Hülsenstück aus unterschiedlichen Materialien zu machen, beispielsweise das Hülsenstück aus einem etwas elastischeren Material, das die Funktion als Knickschutz noch verbessert. In jedem Falle wirkt aber die Verlängerung als eine Sicherung gegen negative Auswirkung von Schlauchbiegungen im Bereich des Schlauchanschlusses, die große einseitige Kräfte auf den Festlegungsbereich des Schlauches ausüben würden.

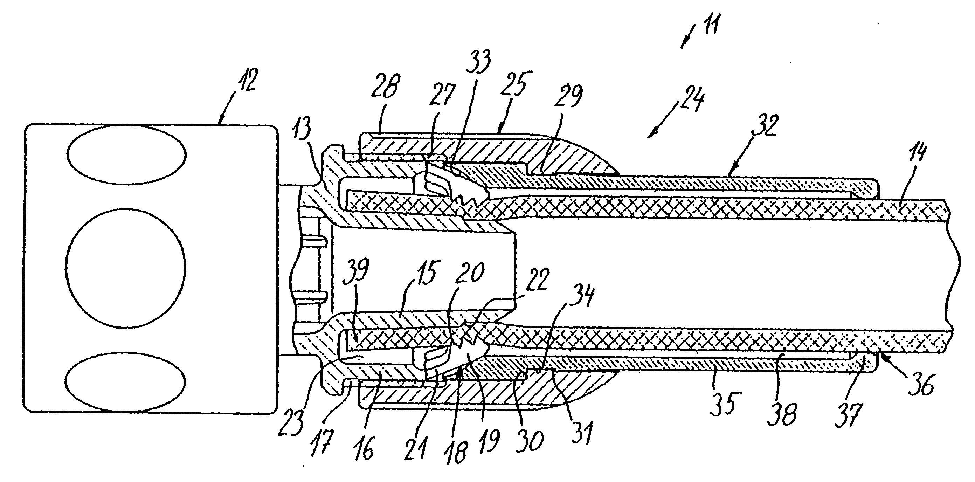

### KURZBESCHREIBUNG DER ZEICHNUNG

Ein Ausführungsbeispiel der Erfindung ist in der Zeichnung dargestellt und wird im Folgenden näher erläutert.
Die Zeichnung zeigt einen Längsschnitt durch einen Schlauchanschluß.

### BESCHREIBUNG DES AUSFÜHRUNGSBEISPIELS

Die Zeichnung zeigt einen Schlauchanschluß 11, der baulich mit einer Schlauchkupplung 12 verbunden ist. Sie besitzen einen gemeinsamen Grundkörper 13, an dem ein Rohransatz 15 angeformt ist, der in seinem Außendurchmesser dem Nenn-Innendurchmesser des anzuschließenden Schlauches 14 angepaßt ist.

Den Rohransatz 15 umgibt ein Rohrstutzen 16, der ein Außengewinde 17 hat. An seinem freien Ende sind Greifelemente 18 angeformt, die aus einem Nockenteil 19 mit innerer Greifverzahnung 20 bestehen und über einen Steg 21 mit dem Rohrstutzen einstückig geformt sind. Durch Einschnitte zwischen den Greifelementen sind diese als einzelne Greifsegmente ausgebildet und unabhängig voneinander in radialer Richtung schwenkbar.

Den Greifelementen gegenüber liegt eine Stufe 22 des Rohransatzes 15. Zwischen Rohransatz 15 und Rohrstutzen 16 bildet sich ein Ringraum zur Aufnahme des Schlauchendes 39.

Auf das Gewinde 17 des Rohrstutzens 16 ist ein Schraubstück 25 einer Hülse 24 geschraubt. Die Hülse 24 ist zweiteilig aus dem Schraubstück 25 und einem Hülsenstück 32 gebildet. Sie sind über Verbindungsmittel miteinander verbunden, die im dargestellten Beispiel aus einem inneren umlaufenden Vorsprung 29 des mit einem Innengewinde 27 und einer äußeren Griffriffelung 28 versehenen Schraubstückes 25 und einer entsprechend geformten Ausnehmung 34 im Hülsenstück 32 gebildet sind. Das Hülsenstück ragt aus dem Schraubstück, das nach Art einer Überwurfmutter wirkt, mit einer Verlängerung 35 hinaus, deren über das Schraubstück hinausragende Länge größer ist als der Schraubdurchmesser. Beim bevorzugten Ausführungsbeispiel ist diese Länge fast das Doppelte des Schauch-Außendurchmessers.

Der Rohrstutzen endet, im Richtung des Schlauchverlaufes gesehen, kurz hinter dem Angriffspunkt der Greifelemente 18. Dort beginnt bereits die Hülsenverlängerung 35, und der Abstand von dort bis zur Mündung 36 der im wesentlichen rohrförmigen Verlängerung beträgt nahezu drei Schlauchdurchmesser. Die Verlängerung 35 hat einen Innendurchmesser, der etwas größer ist als der vorgesehene normale Schlauch-Außendurchmesser. Dieser Abstand ist jedoch sehr gering und liegt meist unter 1 mm bzw. im Bereich von einem Zehntel bis einem Dreißigstel des Schlauch-Außendurchmesers. Er soll sicherstellen, daß der Schlauch in diesem Bereich ohne wesentliche Hindernisse eingeschoben werden kann.

Im Bereich der Mündung 36 ist ein innerer Wulst an der Verlängerung vorgesehen, der in seinem Innendurchmesser dem Schlauch mit Nenn-Innendurchmesser und normaler Wandstärke entspricht.

### FUNKTION

Die Zeichnung zeigt die Schlauchkupplung im angeschlossenen Zustand. Vor dem Anschluß des Schlauches ist das Schraubstück 25 von dem Gewinde 17 weitgehend heruntergeschraubt, so daß die Betätigungsfläche 33 des Hülsenstücks 32 die Greifelemente 18 freigibt und sie nach außen ausweichen können.

Zum Anschluß eines Schlauches 14 wird er mit seinem freien Ende 39 durch die Hülse 24 gesteckt. Er wird also an der Mündung 36 eingefädelt und wird dann über die übrige Länge der Verlängerung 35 relativ reibungsfrei durchgesteckt. Wenn das Ende 39 am Ende des Ringraumes 23 liegt, wird das Schraubstück 25 mit seinem Innengewinde 27 auf das Außengewinde 17 des Rohrstutzens geschraubt. Das dadurch über den Vorsprung 34 und die daran gebildete Abstützschulter 30 in der Zeichnung nach links, also auf den Grundkörper 13 zu mitgenommene Hülsenstück drückt mit seiner trichterförmig konischen Betätigungsfläche 33 auf die Außenseite der Nockenteile 19 der Greifelemente 18 und drückt diese unter elastischer Verbiegung der Stege 21 nach innen. Sie wirken dabei ähnlich einem Filmscharnier, haben aber auch erhebliche Kapazität zur Axialkraftaufnahme. Bei dieser Bewegung kann sich das Schraubstück 25 gegenüber dem Hülsenstück 32 verdrehen, so daß das Hülsenstück u.U., je nach den auftretenden Reibungs- und Kraftverhältnissen, sich nicht mitdreht.

Wie aus der Zeichnung zu erkennen ist, drücken sich die Greifelemente 18 mit ihrer Verzahnung 20 in die Schlauchwand ein und drücken diese fest und abdichtend auf die Außenwand des Rohrstutzens 15 und in die dort, falls vorgesehene Stufe 22.

Damit ist ein dichter und mechanisch fester Schlauchanschluß hergestellt. Bei Druckaufbringung auf den Schlauch kann dieser sich im Bereich der Verlängerung 35 nur um den geringen Abstand 38 zwischen Schlauch und Innendurchmesser dehnen und legt sich dann an die Außenwand an, die ihn gegen ein Aufblähen stützt. Innen ist der Schlauch im Bereich der Verlängerung frei, da der Rohransatz bereits kurz hinter dem Klemmbereich (Greifelemente 18) endet. Dies erleichtert auch das Aufstecken des Schlauches auf den Rohransatz, dessen schwach konische Ausbildung den Schlauch dabei etwas aufweitet.

Im Bereich der Mündung 36 ist der Schlauch noch einmal durch den Wulst 37 geführt und auch so weit abgedichtet, daß ein Eindringen von Schmutz in den Zwischenraum nicht zu befürchten ist. Beim Auftreten von Biegekräften wirken diese sich im Bereich der Mündung 36 aus, die ausreichend weit von dem eigentlichen Klemmbereich entfernt ist, um diesen von axialen Zugkräften in Auswirkung der Biegekräfte freizuhalten. Dadurch werden Knick-, Biege- und sonstige Kräfte weitgehend von dem Verbindungsbereich weggehalten.

## Patentansprüche

1. Schlauchanschluß, insbesondere zum Anschluß von Schläuchen (14), wie Gartenschläuchen, an Schlauchkupplungen (12), mit einem Rohransatz (15), auf den der Schlauch (14) geschoben wird, und mit Greifelementen (18), die den Schlauch (14) von außen her unter Einwirkung einer Hülse (24) auf den Rohransatz (15) drücken, wobei die Hülse (24) eine den Schlauch umgebende Verlängerung (35) hat, die über den Rohransatz (15) hinausragt, **dadurch gekennzeichnet, daß** die Greifelemente (18) als scharnierartig angeformte Greifsegmente mit Innenverzahnung (20) und einer äußeren, mit einer Betätigungsfläche (33) der Hülse (24) zusammenwirkenden Druckfläche ausgebildet sind.

2. Schlauchanschluß nach Anspruch 1, **dadurch gekennzeichnet, daß** die Hülse (24) in ihrem über den Rohransatz (15) hinausragenden Abschnitt im wesentlichen zylindrisch, mit Abstand (38) vom Schlauch (14) ausgebildet ist und insbesondere an ihrer Hülsenmündung (36), aus der der Schlauch (14) hinausragt, einen dem Schlauchaußendurchmesser im wesentlichen angepaßten Wulst (37) aufweist.

3. Schlauchanschluß nach Anspruch 1 oder 2, **dadurch gekennzeichnet, daß** die Hülsenverlängerung (35) um mindestens den Schlauchdurchmesser, vorzugsweise das 2- bis 3-fach des Schlauchdurchmessers, über den Rohransatz (15) hinausragt.

4. Schlauchanschluß nach einem der vorhergehenden Ansprüche, **dadurch gekennzeichnet, daß** die Hülse (24) mehrteilig, insbesondere zweiteilig, ausgebildet ist und vorzugsweise aus einem Schraubstück (25) mit einem Gewinde (27) und einem Hülsenstück (32) besteht.

5. Schlauchanschluß nach Anspruch 4, **dadurch gekennzeichnet, daß** das Hülsenstück (32) drehbar, jedoch in axialer Richtung kraftübertragend mit dem Schraubstück (25) verbunden ist und vorzugsweise an dem Hülsenstück (32) eine ggf. konische Betätigungsfläche (33) für die Greifelemente (18) ausgebildet ist.

6. Schlauchanschluß nach einem der Ansprüche 4 oder 5, **dadurch gekennzeichnet, daß** Schraub- und Hülsenstücke (25, 32) relativ zueinander drehbar verbunden sind.

7. Schlauchanschluß nach einem der Ansprüche 4 bis 6, **dadurch gekennzeichnet, daß** Schraubstück und Hülsenstück (25, 32) durch beim Aufschieben des Schraubstückes (25) auf das Hülsenstück (32) wirksame Verbindungsmittel aneinander festgelegt sind, die vom Schlauchanschluß weg eine axiale Anschlagfläche (30) aufweisen, während in der Gegenrichtung eine Rastverbindung vorgesehen ist.

8. Schlauchanschluß nach einem der vorhergehenden Ansprüche, **dadurch gekennzeichnet,daß** die Greifelemente (18) am Ende eines Stutzens (16) eines auch den Rohransatz (15) aufweisenden Grundkörpers (13) des Schlauchanschlusses (11) vorgesehen sind, der den Rohransatz (15) unter Bildung einer ringförmigen Ausnehmung (23) zur Aufnahme des anzuschließenden Schlauchendes (39) umgibt, wobei vorzugsweise der Stutzen (16) ein Außengewinde (17) zum Aufschrauben der Hülse (24) aufweist.

9. Schlauchanschluß nach einem der vorhergehenden Ansprüche, **dadurch gekennzeichnet, daß** der Rohransatz (15) an einer den Greifelementen (18) gegenüberliegenden Stelle eine Vertiefung, vorzugsweise eine stufige Verjüngung (22), hat.

## Claims

1. Hose connector, particularly for the connection of hoses (14), such as garden hoses, to hose couplings (12), with a socket (15) on which is fitted the hose (14), and with gripping elements (18), which press the hose (14) from the outside and under the action of a sleeve (24) onto the socket (15), the sleeve (24) having an extension (35) which projects over and beyond the socket (15), **characterized in that** the gripping elements (18) are constructed as hinge-like, shaped gripping segments with inner teeth (20) and an outer pressure surface cooperating with an actuating surface (33) of the sleeve (24).

2. Hose connector according to claim 1, **characterized in that** in its portion projecting beyond the socket (15) the sleeve (24) is substantially cylindrical and is preferably provided with a spacing (38) from the hose (14) and in particular has on its sleeve mouth (36) from which the hose (14) projects a bead (37) substantially adapted to the hose external diameter.

3. Hose connector according to claim 1 or 2, **characterized in that** the sleeve extension (35) projects beyond the socket (15) by at least the hose diameter and preferably 2 to 3 times the hose diameter.

4. Hose connector according to one of the preceding claims, **characterized in that** the sleeve (24) is constructed in multipart, particularly two-part manner and preferably comprises a screw piece (25) with a thread (27) and a sleeve piece (32).

5. Hose connector according to claim 4, **characterized in that** the sleeve piece (32) is connected in rotary, but axially force-transferring manner to the screw piece (25) and preferably on the sleeve piece (32) is constructed an optionally conical actuating surface (33) for the gripping elements (18).

6. Hose connector according to one of the claims 4 or 5, **characterized in that** the screw and sleeve pieces (25, 32) are connected so as to rotate relative to one another.

7. Hose connector according to one of the claims 4 to 6, **characterized in that** the screw piece and sleeve piece (25, 32) are fixed to one another by connecting means acting on the sleeve piece (32) on engaging the screw piece (25) and which, away from the hose connector, have an axial stop face (30), whereas a locking connection is provided in the opposite direction.

8. Hose connector according to one of the preceding claims, **characterized in that** the gripping elements (18) are provided at the end of a bush (16) of a body (13) of the hose connections (11) also having the socket (15) and which surrounds the bush (16), accompanied by the formation of a circular recess (23) for receiving the hose end (39) to be connected and preferably the bush (16) has an external thread (17) for screwing on the sleeve (24).

9. Hose connector according to one of the preceding claims, **characterized in that** the socket (15) has at a point opposite to the gripping elements (18) a depression and preferably a stepped taper (22).

## Revendications

1. Raccord de tuyau flexible, notamment pour le raccordement de tuyaux flexibles (14), tels que des tuyaux d'arrosage, à des coupleurs pour tuyaux flexibles (12), avec une tubulure (15), au-dessus duquel le tuyau souple est poussé, et avec des éléments de préhension (18), qui serrent le tuyau souple (14) de l'extérieur sur la tubulure (15) sous l'action d'une douille (24), la douille (24) ayant un prolongement (35) entourant le tuyau souple, qui saille au-delà de la tubulure (15), **caractérisé en ce que** les éléments de préhension (18) sont réalisés en tant que segments de préhension adaptés à la manière de charnières avec une denture intérieure (20) et une surface de pression extérieure agissant ensemble avec une surface d'actionnement (33) de la douille (24).

2. Raccord de tuyau flexible d'après la revendication 1, **caractérisé en ce que** la douille (24) est réalisée dans son secteur saillant au-delà de la tubulure (15) essentiellement de manière cylindrique, avec un écart (38) du tuyau souple (14) et qu'elle présente notamment à son embouchure de douille (36), hors de laquelle saille le tuyau flexible (14), un renflement (37) essentiellement adapté au diamètre de tuyau souple.

3. Raccord de tuyau flexible d'après les revendications 1 ou 2, **caractérisé en ce que** le prolongement de douille (35) saille au-delà de la tubulure (15) au moins d'une valeur correspondant au diamètre de tuyau souple, de préférence de 2 à 3 fois le diamètre de tuyau souple.

4. Raccord de tuyau flexible d'après une des revendications précédentes, **caractérisé en ce que** la douille (24) est réalisée en plusieurs pièces, en particulier en deux pièces et qu'elle est de préférence constituée d'une pièce à pas de vis (25) avec un filet (27) et d'une pièce en douille (32).

5. Raccord de tuyau flexible d'après la revendications 4, **caractérisé en ce que** la pièce en douille (32) est jointe à la pièce à pas de vis (25) de manière rotative, cependant à transmission de force en direction axiale et que une surface d'actionnement (33) éventuellement conique pour les éléments de préhension (18) est réalisée de préférence sur la pièce en douille (32).

6. Raccord de tuyau flexible d'après une des revendications 4 ou 5, **caractérisé en ce que** les pièces à pas de vis et en douille (25, 32) sont raccordées de manière relativement rotative entr'elles.

7. Raccord de tuyau flexible d'après une des revendications de 4 à 6, **caractérisé en ce que** la pièce à pas de vis et la pièce en douille (25, 32) sont fixées entr'elles par des moyens de raccordement efficaces en poussant la pièce à pas de vis (25) sur la pièce en douille (32), moyens qui présentent en direction opposée au raccord de tuyau souple une surface d'arrêt (30) axiale, tandis que dans l'autre direction est prévu un raccordement à encliquetage.

8. Raccord de tuyau flexible d'après une des revendications précédentes, **caractérisé en ce que** les éléments de préhension (18) sont prévus à l'extrémité d'un embout (16) d'un corps de base (13) présentant également la tubulure (15), du raccord de tuyau souple (11), lequel entoure la tubulure (15) sous formation d'un creux (23) de forme annulaire pour le logement de l'extrémité de tuyau flexible (39) à raccorder, l'embout (16) de préférence présentant un filetage extérieur (17) pour visser la douille (24).

9. Raccord de tuyau flexible d'après une des revendications précédentes, **caractérisé en ce que** la tubulure (15) présente dans un endroit à l'opposé des éléments de préhension (18) un creux, de préférence une contracture (22) à gradins.
